# EUROPEAN PATENT SPECIFICATION

(11) **EP 1 512 848 B1**
(45) Date of publication and mention of the grant of the patent: **27.09.2006**
(21) Application number: 04020274.9
(22) Date of filing: 26.08.2004
(51) Int. Cl.: F01N 3/08, F01N 3/20, F02D 41/02

(54) **Exhaust purifying apparatus and method for purifying exhaust gas**
Abgasreinigungsvorrichtung sowie Verfahren zur Abgasreiningung
Dispositif et procédée de purification de gaz d'échappement

(30) Priority: 03.09.2003 JP 2003311560
(43) Date of publication of application: 09.03.2005
(73) Proprietor: Toyota Jidosha Kabushiki Kaisha, Toyota-shi, Aichi-ken, 471-8571 (JP); DENSO CORPORATION, Kariya-shi, Aichi-ken, 448-8661 (JP)
(72) Inventor: Yokoi, Tatsuhisa, Toyota-shi, Aichi-ken 471-8571 (JP); Inaba, Takayoshi, Kariya-shi, Aichi-ken 448-8661 (JP); Kusatsugu, Hideyuki, Kariya-shi, Aichi-ken 448-8661 (JP)
(74) Representative: Kuhnen & Wacker

(56) References cited:
- DE-A- 19 847 875
- FR-A- 2 819 854
- FR-A- 2 829 181
- US-A1- 2003 159 435
- US-B1- 6 274 106

## Description

### BACKGROUND OF THE INVENTION

The present invention relates to an exhaust purifying apparatus, which purifies an exhaust gas emitted during the operation of an internal combustion engine, and in particular, relates to an exhaust purifying apparatus, which reduces sulfur oxide occluded by an exhaust purifying catalyst, and makes it released from the exhaust purifying catalyst. The present invention also pertains to a method for purifying the exhaust gas.

In order to purify nitrogen oxide (NOx) in an exhaust gas emitted from an internal combustion engine, and in particular, an internal combustion engine performing lean combustion, a catalytic converter which carries an occlusion-reduction type NOx catalyst has been provided in an exhaust passage. The NOx catalyst occludes nitrogen oxide (NOx) in exhaust gas to purify the exhaust gas when a surrounding ambient atmosphere is in a high oxygen concentration state. The catalyst reduces occluded nitrogen oxide (NOx) when a surrounding ambient atmosphere is in a low oxygen concentration state and an unburned fuel component (hydrocarbon (HC)), or a reducing agent, exists.

Since fuel and lubricant of an internal combustion engine includes sulfur, sulfur oxide (SOx), which is oxide thereof, is generated when the fuel is burnt. This sulfur oxide (SOx) is occluded by a NOx catalyst similarly to the nitrogen oxide (NOx) mentioned above. Since sulfur oxide (SOx) is a chemically stable substance, it is less prone to be released from the NOx catalyst even if an air-fuel ratio of exhaust gas is made smaller than a stoichiometric air-fuel ratio, that is, made richer than the stoichiometric air-fuel ratio. In the state where an occlusion amount of sulfur oxide (SOx) increases (SOx poisoning), the occlusion amount of nitrogen oxide (NOx) decreases by the occlusion amount of the SOx, lowering the NOx occlusion capacity in the NOx catalyst, and eventually, NOx cleaning capacity.

The poisoning elimination processing is conducted to release (discharge) the sulfur oxide (SOx) occluded by the NOx catalyst. In the poisoning elimination processing, fuel is supplied to an exhaust gas by means of, for example, injecting fuel in an exhaust stroke or the like (after injection), or adding fuel from a fuel adding valve provided in an exhaust passage. Then, the temperature of a catalytic converter (catalyst temperature) is raised to the temperature (about 600°C) at which the sulfur oxide (SOx) occluded by the NOx catalyst can be emitted.

Furthermore, the air-fuel ratio of the exhaust gas is adjusted so that the value thereof moves richer than the stoichiometric air-fuel ratio by intermittently adding fuel to the exhaust gas from the fuel adding valve. Part of this added fuel reacts with oxygen in the NOx catalyst (oxidation) so that the catalyst temperature of the NOx catalyst is held at 600°C or higher. Since the remainder of the added fuel is supplied to the NOx catalyst, hydrocarbon (HC) in the fuel is supplied as a reducing agent, which is necessary for poisoning elimination processing. Sulfur oxide (SOx) is reduced by this reducing agent, and is released from the NOx catalyst. Therefore, it is possible to suppress the degradation of the NOx cleaning capacity caused by the sulfur oxide (SOx) by performing such poisoning elimination processing periodically.

For example, Japanese Laid-Open Patent Publication No. 2003-148132 discloses a technology in which fuel is added to exhaust gas so that catalyst temperature is increased.

According to the poisoning elimination processing mentioned above, sulfur oxide (SOx) is emitted from a NOx catalyst by placing the NOx catalyst under elevated temperature such as about 600°C and further making an exhaust air-fuel ratio rich. However, the amount of exhaust gas is small in a particular operating region of the engine such as under low speed and low load, and thus exhaust temperature is low and the amount of oxygen in the exhaust gas also is small. Therefore, even if fuel is supplied to the exhaust gas by after injection and fuel addition, the amount of heat associated with the oxidation of fuel is small, and hence, it is difficult to raise and hold the catalyst temperature to about 600°C, and to emit the sulfur oxide (SOx) from the NOx catalyst. In consequence, the fuel supplied to the exhaust gas becomes wasted, and this may cause the deterioration of fuel consumption by its extent.

Document FR 2 819 851 A1 discloses a method for controlling of a system for treating of exhaust gas of an internal combustion engine. The engine is provided with a nitrogen oxide trap. Due to sulphur being present in the exhaust gas, storage capacity of such a catalyst is limited since sulphur deposits in the zones of the catalyst intended for binding nitrogen oxides. With the proposed method, for purifying the catalyst of sulphur oxides, the temperature of the exhaust gas is increased for a predetermined period of time.

### SUMMARY OF THE INVENTION

Accordingly, it is an objective of the present invention to provide an exhaust purifying apparatus, which prevents the wasteful supply of fuel to exhaust gas, and suppresses the deterioration of fuel consumption. The present invention also pertains to a method for purifying the exhaust gas.

To achieve the above objective, the present invention provides an exhaust purifying apparatus. The apparatus purifies exhaust gas that is exhausted through an exhaust passage from an internal combustion engine as the engine operates. The exhaust gas contains sulfur oxides. The apparatus includes an exhaust purifying catalyst located in the exhaust passage. The catalyst is capable of occluding sulfur oxides. The apparatus includes emission control means, judging means and suspending means. The emission control means supplies fuel to exhaust gas through the exhaust passage, thereby setting the temperature of the catalyst to a temperature at which sulfur oxides occluded by the catalyst can be emitted. The emission control means reduces sulfur oxides occluded by the catalyst to emit the sulfur oxides from the catalyst. Based on change in an occlusion amount of sulfur oxides in the catalyst, the judging means judges whether emission of the sulfur oxides from the catalyst is stagnating. When the judging means judges that emission of sulfur oxides from the catalyst is stagnating, the suspending means suspends supply of fuel to exhaust gas performed by the control means.

According to another aspect of the invention, an exhaust purifying method is provided. Sulfur oxides contained in the exhaust gas is occluded with the catalyst. Fuel is supplied to exhaust gas through the exhaust passage to set the temperature of the catalyst to a temperature at which sulfur oxides occluded by the catalyst can be emitted from the catalyst, and to reduce sulfur oxides occluded by the catalyst to emit the sulfur oxides from the catalyst. Whether emission of the sulfur oxides from the catalyst is stagnating is judged based on change in an occlusion amount of sulfur oxides in the catalyst. Supply of fuel to the exhaust gas is suspended when the emission of sulfur oxides from the catalyst is judged to be stagnating.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
FIG. 1 is a schematic diagram showing the structure of an exhaust purifying apparatus according to one embodiment of the present invention;
FIG. 2 is a flowchart showing the procedure for setting a catalyst control mode on the apparatus shown in FIG. 1;
FIG. 3 is a flowchart showing the procedure for setting an S poisoning elimination suspending flag on the apparatus shown in FIG. 1;
FIG. 4 is a flowchart showing the procedure for setting an S emission stagnation vehicle speed flag in the flowchart shown in FIG. 3;
FIG. 5 is a flowchart showing the procedure for calculating an S emission stagnation determination value in the flowchart shown in FIG. 3;
FIG. 6 is a flowchart showing the procedure for processing a requirement-satisfied time counter in the flowchart shown in FIG. 3;
FIG. 7 is a flowchart showing the procedure for setting an S poisoning elimination suspending flag in the flowchart shown in FIG. 3;
FIG. 8 is a flowchart showing the procedure for switching the S poisoning elimination suspending flag to OFF in the flowchart shown in FIG. 3; and
FIG. 9 is a timing chart for explaining the operation of the exhaust purifying apparatus shown in FIG. 1.

### DETAILED DESCRIPTION OF THE PREFERRED EMBODIMENTS

Hereafter, one embodiment according to the present invention will be described in detail with referring to drawings.

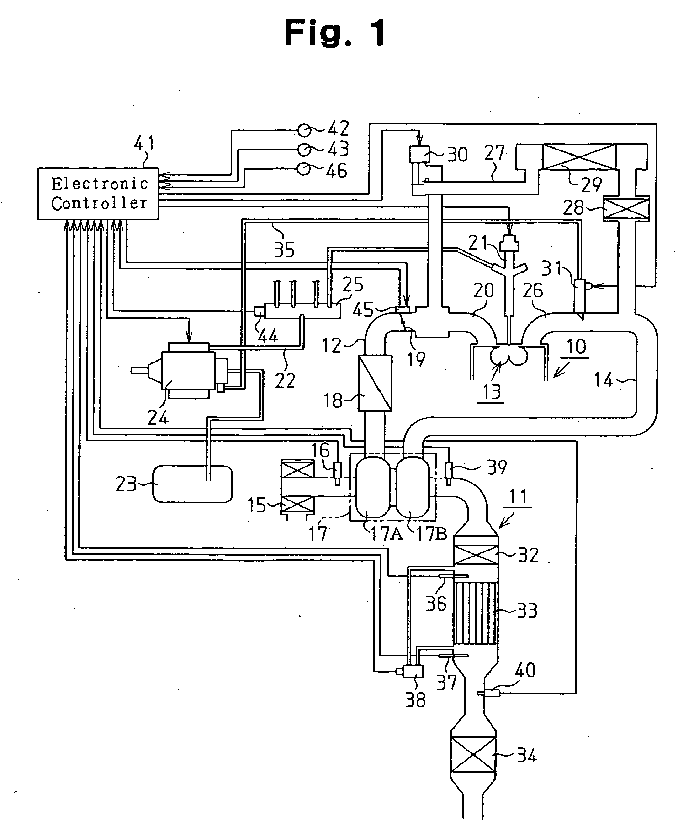

FIG. 1 shows the structure of a diesel engine (hereinafter, simply an engine) 10 and its exhaust purifying apparatus 11 which are mounted in a vehicle. An engine 10 includes an intake passage 12, a combustion chamber 13, and an exhaust passage 14. An air cleaner 15, which purifies intake air in this intake passage 12, is provided in a most upstream section of the intake passage 12. In the engine 10, an air flowmeter 16, which detects a flow rate of air in the intake passage 12, a compressor 17A of a turbocharger 17, an intercooler 18, and an intake throttle valve 19 are arranged in order from the air cleaner 15 towards an intake downstream side. The intake passage 12 is branched in an intake manifold 20 provided downstream of the intake throttle valve 19, and is connected to a combustion chamber 13 of each cylinder of the engine 10 through this branch connection.

A fuel injection valve 21 is provided in the combustion chamber 13 of each cylinder. Each fuel injection valve 21 injects fuel to be combusted in this combustion chamber 13. Fuel is supplied to each fuel injection valve 21 from a fuel tank 23 through a fuel supply passage 22. In the fuel supply passage 22, a fuel feed pump 24 which sucks the fuel from a fuel tank 23 and pressurizes/discharges the fuel, and a common rail 25 which is a high-pressure fuel pipe which accumulates the discharged high-pressure fuel are provided. The fuel injection valve 21 of each cylinder is connected to the common rail 25.

In the exhaust passage 14, an exhaust manifold 26 for gathering exhaust gas discharged from each cylinder, and a turbine 17B of the turbocharger 17 are provided.

Furthermore, an exhaust gas recirculation (hereafter, described as EGR) system, which recirculates part of the exhaust gas during air intake, is adopted in the engine 10. The EGR system is equipped with an EGR passage 27 which communicate the exhaust passage 14 to the intake passage 12. A section upstream of the EGR passage 27 is connected between the exhaust manifold 26 of the exhaust passage 14, and the turbine 17B. In the midst of the EGR passage 27, an EGR cooler catalyst 28 which purifies the exhaust gas which is recirculated, an EGR cooler 29 which cools the exhaust gas which is recirculated, and an EGR valve 30 which adjusts a flow rate of the exhaust gas which is recirculated are arranged in order from the upstream side. A section downstream of the EGR passage 27 is connected between the intake throttle valve 19 of the intake passage 12, and the intake manifold 20.

In such an engine 10, after the intake air in the intake passage 12 is purified by the air cleaner 15, it is introduced into the compressor 17A of the turbocharger 17. In the compressor 17A, the introduced air is compressed and discharged into the intercooler 18. After the air, which becomes hot by the compression, is cooled by the intercooler 18, it is distributed and supplied through the intake throttle valve 19 and intake manifold 20 to the combustion chamber 13 of each cylinder. A flow rate of the air in such an intake passage 12 is adjusted through the opening control of the intake throttle valve 19. The flow rate of the air, that is, an intake air amount is detected by an air flowmeter 16.

In each combustion chamber 13 where the air is introduced, fuel is injected from a fuel injection valve 21 in a compression stroke of each cylinder. An air-fuel mixture consisting of the air introduced through the intake passage 12, and the fuel injected from the fuel injection valve 21 is combusted in the combustion chamber 13.

The exhaust gas generated by combustion in the combustion chamber 13 of each cylinder is introduced into the turbine 17B of the turbocharger 17 through the exhaust manifold 26. When the turbine 17B is driven by a force generated by this introduced exhaust gas, the compressor 17A provided in the intake passage 12 is driven to compress the above-mentioned air.

Part of the exhaust gas generated by the above-mentioned combustion is introduced into the EGR passage 27. The exhaust gas introduced into the EGR passage 27 is purified by the EGR cooler catalyst 28, and after being cooled by the EGR cooler 29, it is recirculated into the air in a section downstream of the intake throttle valve 19 in the intake passage 12. The flow rate of the exhaust gas, which is recirculated in this way, is adjusted through the opening control of the EGR valve 30.

The engine 10 is constituted as mentioned above. Next, an exhaust purifying apparatus 11 for purifying an exhaust gas exhausted from this engine 10 will be explained. The exhaust purifying apparatus 11 is equipped with a fuel adding valve 31, as well as three catalytic converters (a first catalytic converter 32, a second catalytic converter 33, and a third catalytic converter 34) as an exhaust purifying catalyst.

The first catalytic converter 32 is located downstream of the turbine 17B. The first catalytic converter 32 bears an occlusion reduction type NOx catalyst, and not only occludes nitrogen oxide (NOx) in the exhaust.gas, but also reduces and purifies the occluded nitrogen oxide (NOx) by the supply of an unburned fuel component used as a reducing agent. The second catalytic converter 33 is located downstream of the first catalytic converter 32. The second catalytic converter 33 is formed of a porous material which allows gas components in the exhaust gas to pass, and prevents fine particulate matter PM in this exhaust gas from passing, and bears the occlusion reduction type NOx catalyst. The third catalytic converter 34 is located downstream of the second catalytic converter 33. The third catalytic converter 34 bears an oxidation catalyst, which purifies the exhaust gas through the oxidation of hydrocarbon (HC) and carbon monoxide (CO) in the exhaust gas.

The fuel adding valve 31 is arranged in an exhaust gas aggregation section of the exhaust manifold 26. The fuel adding valve 31 is connected to the above-mentioned fuel feed pump 24 through the fuel passage 35, and injects and adds fuel supplied from this fuel feed pump 24 in the exhaust gas as a reducing agent. This added fuel temporarily makes the exhaust gas a reducing atmosphere to reduce and purify the nitrogen oxide (NOx) which is occluded in the first catalytic converter 32 and second catalytic converter 33. Furthermore, the second catalytic converter 33 concurrently also purifies the fine particulate matter PM.

In a space between the first catalytic converter 32 and second catalytic converter 33 in the exhaust passage 14, an exhaust temperature sensor 36 is arranged. The sensor 36 detects the temperature of the exhaust gas which passes through this space. That is, the sensor 36 detects the temperature of the exhaust gas before flowing into the second catalytic converter 33 (input exhaust temperature). In a space downstream from the second catalytic converter 33 in the exhaust passage 14, an exhaust temperature sensor 37 is arranged. The sensor 37 detects the temperature of the exhaust gas, which passes through this space. That is, the sensor 37 detects the temperature of the exhaust gas just after passing through the second catalytic converter 33 (output exhaust temperature). A differential pressure sensor 38 is arranged in the exhaust passage 14. The differential pressure sensor 38 detects the pressure difference between a section upstream the second catalytic converter 33 and a section downstream of the second catalytic converter 33. The pressure difference detected by the differential pressure sensor 38 is used so as to detect clogging inside the second catalytic converter 33. Furthermore, oxygen sensors 39 and 40 which detect the oxygen concentration in the exhaust gas are located upstream of the first catalytic converter 32 of the exhaust passage 14 and between the second catalytic converter 33 and third catalytic converter 34, respectively.

An electronic controller 41 controls the engine 10 and the exhaust purifying apparatus 11, which are explained above. The electronic controller 41 includes a CPU which executes various types of processing which relate to the control of the engine 10, a ROM which stores a program and data necessary for the control, a RAM which stores the processing result of the CPU and the like, a backup RAM which stores various data also after electric power supply is stopped, and input and output ports for exchanging information with the external.

Besides the respective sensors 16, 36 to 40 mentioned above, an NE sensor 42 which detects an engine speed, an acceleration pedal sensor 43 which detects an accelerator manipulation amount, a common rail sensor 44 which detects the internal pressure of the common rail 25, a throttle valve sensor 45 which detects the opening degree of the intake throttle valve 19, and a vehicle speed sensor 46 which detects the speed (vehicle speed SPD) of the vehicle are connected to the input ports of the electronic controller 41. The above-mentioned intake throttle valve 19, fuel injection valve 21, fuel feed pump 24, fuel adding valve 31, and EGR valve 30 are connected to the output ports of the electronic controller 41. The electronic controller 41 performs various types of operation control of the engines 10 including the control, which relates to the purification of the exhaust gas by controlling equipment connected to these output ports on the basis of the detection results of above-mentioned respective sensors 16, 36 to 40, and 42 to 45.

The electronic controller 41 executes control to the catalytic converters 32 to 34 (catalyst control) as one of controls, which relate to the purification of the exhaust gas. Four catalyst control modes, that is, a catalyst regeneration control mode, a sulfur poisoning (hereafter, this is described as S poisoning) elimination control mode, a NOx reduction control mode, and a normal control mode are set in this catalyst control. The electronic controller 41 selects and executes a catalyst control mode according to the state of the catalytic converters 32 to 34.

The catalyst regeneration control mode is a mode in which control that the fine particulate matter PM deposited in the second catalytic converter 33 are combusted to be exhausted as carbon dioxide (CO₂) and water (H₂O) is performed, and a mode of repeating continuously fuel addition from the fuel adding valve 31 to raise the catalyst temperature (catalyst floor temperature) (600 to 700°C).

The S poisoning elimination control mode is a mode in which control (S poisoning elimination control) which makes sulfur oxide (SOx) emitted is performed when NOx occlusion reduction catalysts in the first catalytic converter 32 and the second catalytic converter 33 are poisoned by sulfur oxide (SOx) and the occlusion capacity of the nitrogen oxide (NOx) drops. In this mode, temperature rising control and S emission control are performed. In temperature rising control, in addition to the normal injection (pilot injection, main injection) in the engine 10, after injection which makes fuel injected from the fuel injection valve 21 in an expansion stroke, an exhaust stroke, etc are executed. Since exhaust temperature is raised and hydrocarbon (HC) in the exhaust gas is increased by this injection, the catalyst temperature of both the catalytic converters 32 and 33 rise to the temperature (300°C or higher) at which fuel addition by the fuel adding valve 31 is possible. The catalyst temperature of both the catalytic converters 32 and 33 rises by fuel being injected (added) from the fuel adding valve 31 after the catalyst temperature rises to this temperature, and it becomes the temperature (600°C or higher) at which sulfur oxide (SOx) can be emitted.

In the S emission control, fuel addition from the fuel adding valve 31 over specified time (about 10 seconds) and addition stop over specified time (about 10 seconds) is repeated, and hence, the air-fuel ratio of the exhaust gas is made richer than the stoichiometric air-fuel ratio. Hydrocarbon (HC) is supplied to both the catalytic converters 32 and 33 by the fuel addition, this hydrocarbon (HC) reacts with oxygen in both the catalytic converters 32 and 33, and the catalyst temperature of both the catalytic converters 32 and 33 is held at 600°C or higher. At the same time, the oxygen concentration in both the catalytic converters 32 and 33 drops, and the sulfur oxide (SOx) is released (emitted) from both the catalytic converters 32 and 33.

It is possible to suppress the drop of the NOx cleaning capacity due to the sulfur oxide (SOx) by performing such poisoning elimination processing periodically. The reason why the fuel addition is performed intermittently is as follows. When the air-fuel ratio of the exhaust gas becomes richer than the stoichiometric air-fuel ratio, the sulfur oxide (SOx, which is SO₂ in this case) emitted from both the catalytic converters 32 and 33 is reduced to be exhausted as hydrogen sulfide (H₂S). An amount of emission of this hydrogen sulfide (H₂S) increases when the time of controlling the air-fuel ratio of the exhaust gas to the rich side rather than the stoichiometric air-fuel ratio at the time of the S emission control is long, or when the air-fuel ratio of the exhaust gas is excessively rich than the stoichiometric air-fuel ratio. On the other hand, hydrogen sulfide (H₂S) becomes hard to be exhausted as the air-fuel ratio of the exhaust gas approaches the stoichiometric air-fuel ratio and the amount of emission of the sulfur oxide (SOx) also decreases. In addition, when fuel is added for long time for the emission of the sulfur oxide (SOx), the catalyst temperature may excessively rise by the fuel addition. Therefore, discharge of hydrogen sulfide (H₂S) and the excess temperature rising of the catalyst temperature are suppressed with securing the emission of the sulfur oxide (SOx) by performing the fuel addition intermittently as mentioned above. The processing that the electronic controller 41 selects the S poisoning elimination control mode and performs the corresponding S poisoning elimination control is equivalent to emission control means.

The NOx reduction control mode is a mode of reducing the nitrogen oxide (NOx), which is occluded in the NOx occlusion reduction catalyst in the first catalytic converter 32 and second catalytic converter 33, to nitrogen (N₂), carbon dioxide (CO₂), and water (H₂O), and emitting them. In this mode, the catalyst temperature becomes comparatively low temperature (e.g., 250°C to 500°C) by the intermittent fuel addition in a comparatively long interval from the fuel adding valve 31. States other than these correspond to the normal control mode, and addition of reducing agent from the fuel adding valve 31 is not made in this normal control mode.

According to the S poisoning elimination control mentioned above, when the catalyst temperature rises to about 600°C, the sulfur oxide (SOx) is emitted from both the catalytic converters 32 and 33. Nevertheless, depending on an operational state of the engine 10, when a vehicle is in a traffic congestion, the amount of air drawn into the engine 10 is little, the temperature in the combustion chamber 13 is low, and in connection with this, intake and exhaust temperatures are also low. Under such an operational state, since there is little amount of the oxygen in connection with combustion of the fuel even if it performs temperature rising control and S emission control and supplies fuel to exhaust gas, there are little heating values generated by combustion. Therefore, it is hard to raise the catalyst temperature to about 600°C, and to make the sulfur oxide (SOx) emitted. If the catalyst temperature does not arrive at about 600°C and the sulfur oxide (SOx) is not emitted, the fuel added becomes wasted as a result and causes the deterioration of fuel consumption by the extent. In this embodiment, when the emission of the sulfur oxide (SOx) stagnates during the S emission control, the S emission control is suspended.

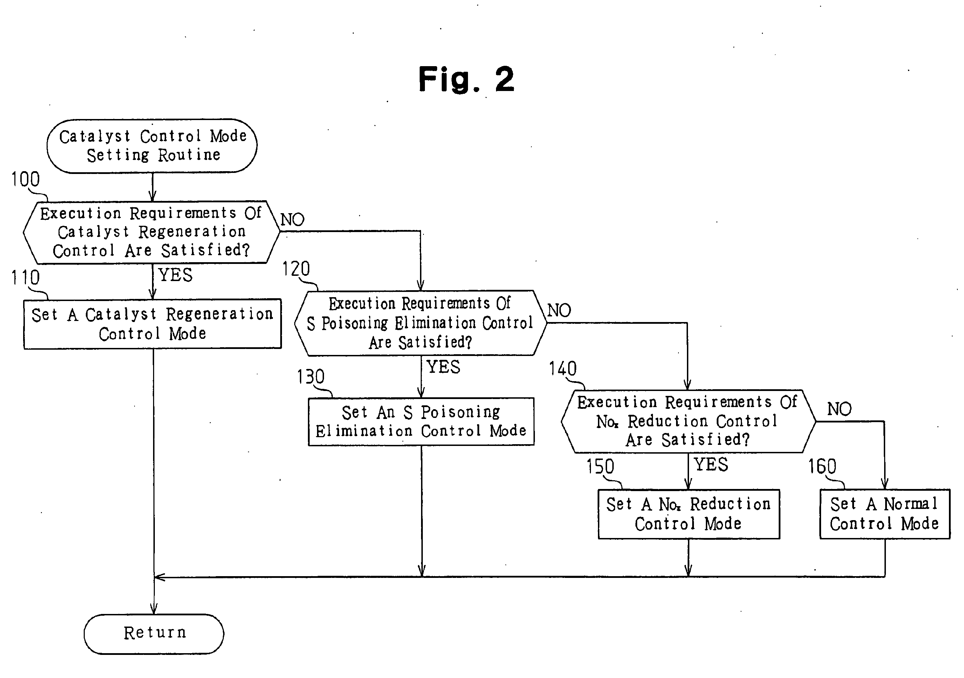

Next, actions and advantageous effects of this embodiment constituted as mentioned above will be explained. The flowchart in FIG. 2 shows a routine for setting the above-mentioned catalyst control mode among the various types of control performed by the electronic controller 41. This is executed each time a crankshaft, which is an output shaft of the engine 10, rotates by a predetermined angle (every fixed crank angle).

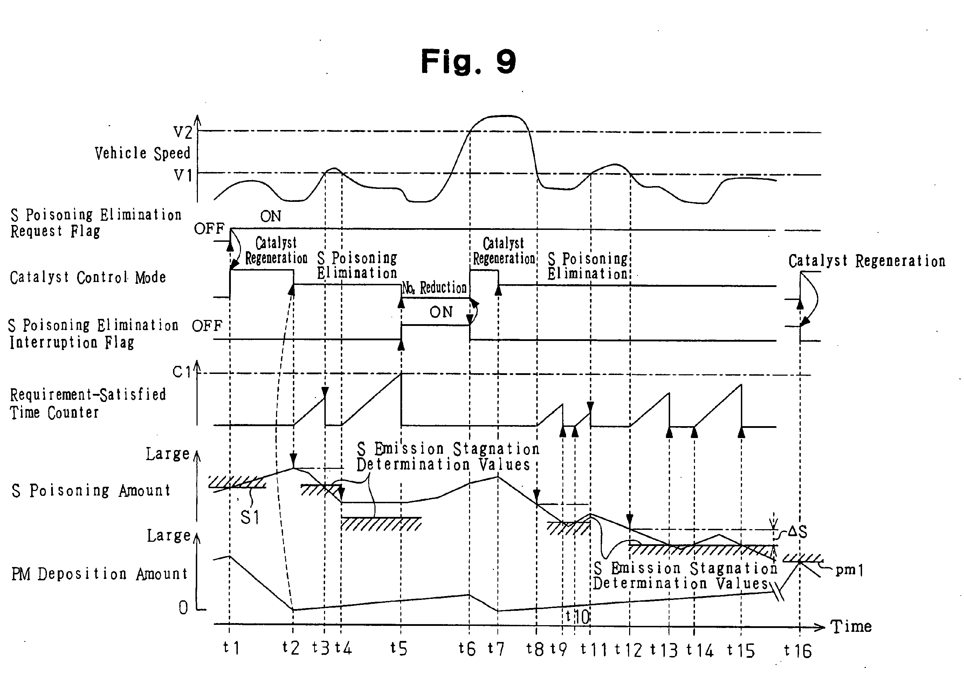

The electronic controller 41 judges at step 100 whether execution requirements of catalyst regeneration control are satisfied first. Execution requirements of the catalyst regeneration control consist of two requirements: a catalyst regeneration request flag is ON; and a requirement relating to temperature such as catalyst temperature, input exhaust temperature, and output exhaust temperature (catalyst regeneration temperature requirement) are satisfied. Only when both of requirements are satisfied, the execution requirements of the catalyst regeneration control are satisfied. The catalyst regeneration request flag is switched to OFF (refer to time t2 and time t7 in FIG. 9) when the deposition amount of the fine particulate matter PM on the second catalytic converter 33 is 0, and is switched to ON (refer to time t16 in FIG. 9) when this deposition amount becomes a predetermined value pm1 or larger. The deposition amount of the fine particulate matter PM is calculated with reference to a map where the relationship between the engine load and the deposition amount is specified beforehand, for example. When the execution requirements of the catalyst regeneration control are satisfied, the process goes to step 110 and the catalyst regeneration control mode is set as the catalyst control mode.

On the other hand, when the determination requirements at the above-mentioned step 100 are not satisfied (execution requirements of the catalyst regeneration control are not satisfied), the electronic controller 41 next judges at step 120 whether the execution requirements of the S poisoning elimination control are satisfied. The execution requirements of the S poisoning elimination control consist of the following seven requirements.
(i) The S poisoning elimination request flag should be ON. The S poisoning elimination request flag is set at ON (refer to time t1 in FIG. 9) when the poisoning amount of the sulfur oxide (SOx) (S poisoning amount) becomes more than a predetermined value S1 (e.g., 1.4 g), and is cleared when less than the predetermined value (e.g., 0.6 g).
(ii) The requirement on temperature (S poisoning elimination temperature requirement) such as catalyst temperature, input exhaust temperature, and output exhaust temperature should be satisfied.
(iii) Atmospheric pressure should be a constant value or larger.
(iv) Water temperature should be a constant value or higher.
(v) The S poisoning elimination suspending flag should be OFF. This will be described later.
(vi) A period during which the engine is left idling should be a constant value or shorter.
(vii) The oxygen sensors 39 and 40 should be active.

Only when all of the above-mentioned requirements (i) to (vii) are not satisfied, the execution requirements of the S poisoning elimination control are satisfied. When the execution requirements of the S poisoning elimination control are satisfied, the process goes to step 130 and the S poisoning elimination control mode is set as the catalyst control mode.

On the other hand, when the judgment requirements at the above-mentioned step 120 are satisfied (execution requirements of the S poisoning elimination control are not satisfied), the electronic controller 41 next judges at step 140 whether the execution requirements of the NOx reduction control are satisfied. Execution requirement of the NOx reduction control is requirement on temperature (NOx reduction temperature requirement) such as catalyst temperature and output exhaust temperature are satisfied. When the execution requirements of the NOx reduction control are satisfied, the electronic controller 41 sets at step 150 the NOx reduction control mode as the catalyst control mode. When not satisfied, the electronic controller 41 sets at step 160 the normal control mode as the catalyst control mode.

When setting corresponding control mode at the above-mentioned steps 110, 130, 150, and 160, the electronic controller 41 ends the catalyst control mode setting routine. In another routine, which is not shown, catalyst control according to the control mode, which is set, is performed.

A requirement that an S poisoning elimination suspending flag is OFF is applied to one of the execution requirements of the S poisoning elimination control. The processing that, when the flag is ON in the above-mentioned catalyst control mode setting routine, the execution requirements are not satisfied, and hence, the S poisoning elimination control is not performed (suspended) is equivalent to suspending means.

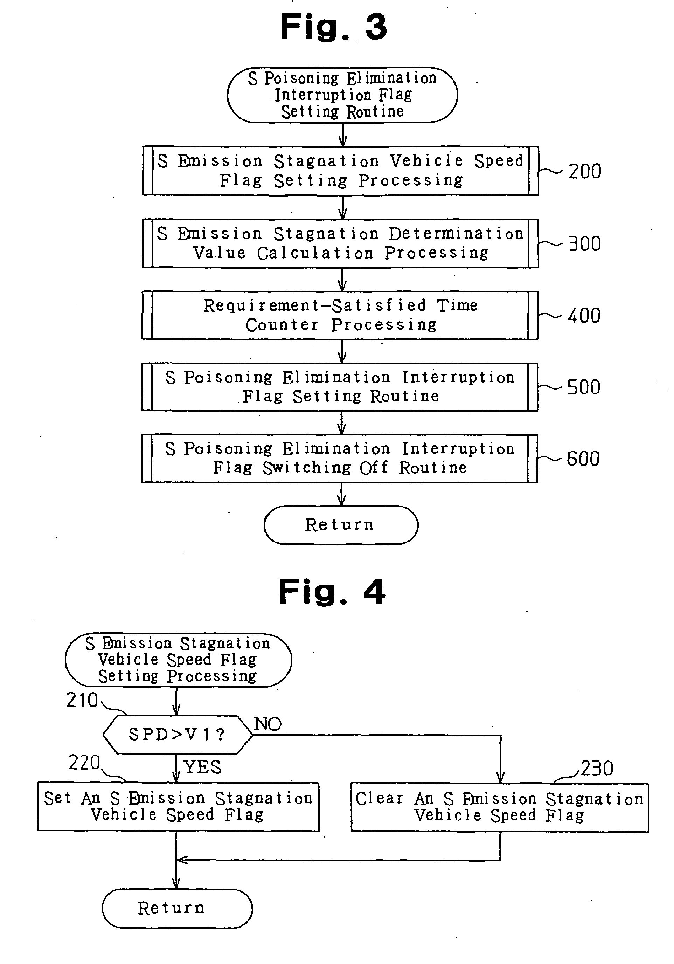

Next, FIG. 3 shows a routine for setting the S poisoning elimination suspending flag in the execution requirements of the S poisoning elimination control mentioned above. In this routine, the electronic controller 41 performs sequentially the processing of setting the S emission stagnation vehicle speed flag (step 200), the processing of calculating the S discharge stagnation determination value (step 300), the processing of the requirement-satisfied time counter (step 400), the processing of setting the S poisoning elimination suspending flag (step 500), and the processing of switching this flag to OFF(step 600). A series of processing in the above-mentioned S poisoning elimination suspending flag setting routine is equivalent to emission stagnation judging means. Next, this processing will be explained in detail with reference to FIGS. 4 to 8.

FIG. 4 shows the detailed processing of setting the S emission stagnation vehicle speed flag (step 200). The S emission stagnation vehicle speed flag is an index at the time of judging whether a vehicle is in a traffic congestion, and eventually, whether S emission stagnates, and is set on the basis of vehicle speed SPD.

When setting the S emission stagnation vehicle speed flag, the electronic controller 41 judges at step 210 whether the vehicle speed SPD detected by the vehicle speed sensor 46 is larger than a predetermined value V1 (e.g., 30 km/h) for congestion judgment. When this judgment requirement is satisfied, the electronic controller 41 sets at step 220 the S emission stagnation vehicle speed flag. Then, the flag is ON. When the requirement is not satisfied, the electronic controller 41 clears at step 230 the S emission stagnation vehicle speed flag. Then, the flag is OFF. After passing through the processing at step 220 or 230, the process goes to the processing (step 300) of calculating the following S emission stagnation determination value.

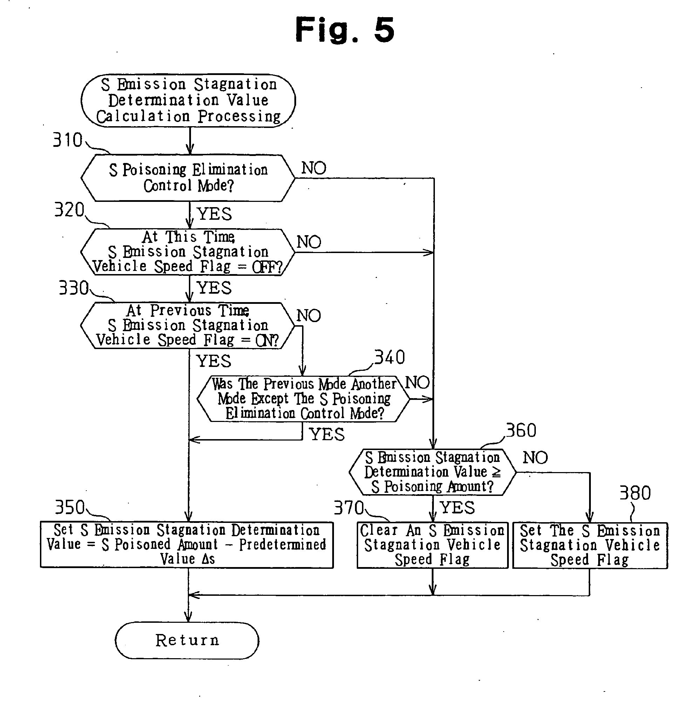

FIG. 5 shows the detailed processing of calculating the S emission stagnation determination value. The S emission stagnation determination value is a value relating to the S poisoning amount, and is an index at the time of judging whether the S poisoning amount is not decreased so much in spite of performing the S emission control, that is, whether the S emission is stagnated.

When calculating the S emission stagnation determination value, the electronic controller 41 judges at steps 310 to 340 whether the situation is suitable for the calculation of the S emission stagnation determination value. At step 310, the electronic controller 41 judges whether the S poisoning elimination control mode is set as the catalyst control mode. When this judgment requirement is satisfied, the electronic controller 41 judges at step 320 whether the S emission stagnation vehicle speed flag is OFF (SPD ≤ V1) in this control period. When this judgment requirement is satisfied, next, the electronic controller 41 judges at step 330 whether the S emission stagnation vehicle speed flag was ON (SPD > V1) in the previous control period. When this judgment requirement is satisfied, that is, when the S emission stagnation vehicle speed flag is switched from ON to OFF during the S poisoning elimination control mode, the process goes to step 350 with determining that the situation is suitable for calculation of the S emission stagnation determination value.

When the judgment requirement at the above-mentioned step 330 is not satisfied, the electronic controller 41 judges at step 340 whether a mode other than the S poisoning elimination control mode was set as the catalyst control mode in the previous control period. When this judgment requirement is satisfied, that is, when the mode is switched to the S poisoning elimination control mode during the S emission stagnation vehicle speed flag being OFF (SPD ≤V1)), the process goes to step 350 also in this case with determining that the situation is suitable for the calculation of the S emission stagnation determination value.

At step 350 coming from the above-mentioned step 330 or 340, the electronic controller 41 subtracts a predetermined value AS from the S poisoning amount at that time, and sets the subtraction result as the S emission stagnation determination value.

On the other hand, when the judgment requirement of the above-mentioned step 310, 320, or 340 is not satisfied, the electronic controller 41 sets the S emission stagnation flag at steps 360 to 380 on the basis of the above-mentioned S emission stagnation determination value and the S poisoning amount at that time. At step 360, the electronic controller 41 judges whether the S emission stagnation determination value is equal to or more than the S poisoning amount at that time. When this judgment requirement is satisfied, the electronic controller 41 clears the S emission stagnation vehicle speed flag at step 370, and when being not satisfied, it sets the S emission stagnation vehicle speed flag at step 380. Thus, except the period of calculating the S emission stagnation determination value, the S emission stagnation flag is set on the basis of the comparison result between the S emission stagnation determination value and S poisoning amount. After passing through the processing at the above-mentioned step 350, 370 or 380, the process goes to the following processing (step 400) of the requirement-satisfied time counter.

In the calculation processing of the S emission stagnation determination value at step 350 mentioned above, if the predetermined value AS is set at an excessively small value, the S poisoning amount becomes equal to or less than the S emission stagnation determination value even if a decreasing rate of the S poisoning amount is small, and the S emission stagnation vehicle speed flag is switched to OFF. As a result, the S emission control becomes hard to be suspended, and it becomes hard to obtain the advantageous effect of suppressing the deterioration of fuel consumption. On the contrary, if the predetermined value ΔS is set at an excessively large value, the S poisoning amount becomes larger than the S emission stagnation determination value even if a decreasing rate of the S poisoning amount is larger, and the S emission stagnation vehicle speed flag is set to ON. As a result, since suspensions of the S emission control are performed excessively, it becomes hard to obtain the poisoning elimination effect by S emission. Therefore, it is preferable to set the predetermined value AS in consideration of not arriving at the deterioration of fuel consumption and not spoiling the poisoning elimination effect. In this embodiment, the predetermined value AS is set as a fixed value (e.g., 0.03 g) in consideration of these points.

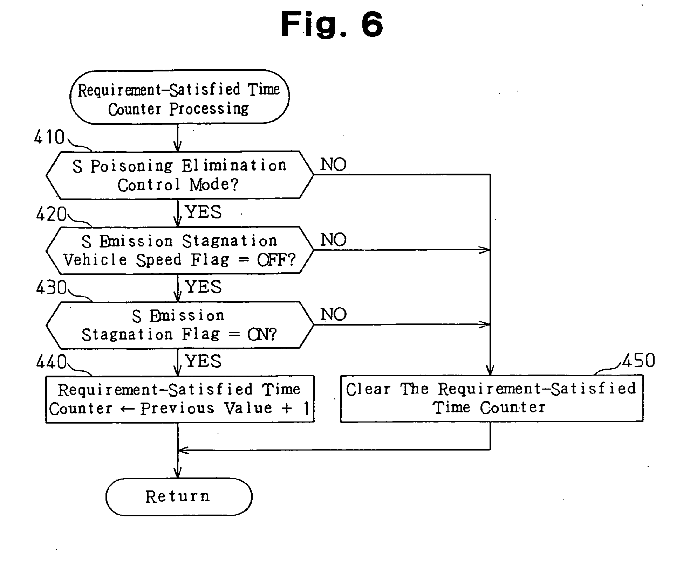

FIG. 6 shows the detailed processing of the requirement-satisfied time counter (step 400). The requirement-satisfied time counter measures the time when the requirements for suspending the S emission control are satisfied. The electronic controller 41 judges respectively whether the mode is the S poisoning elimination control mode (step 410), whether the S emission stagnation vehicle speed flag is OFF (step 420), and whether the S emission stagnation flag is ON (step 430). When all of the judgment requirements at these steps 410 to 430 are satisfied, at step 440, the requirement-satisfied time counter is counted up by 1. On the other hand, when at least one of the judgment requirements at steps 410 to 430 is not satisfied, the requirement-satisfied time counter is cleared at step 450. After passing through the processing at the above-mentioned step 440 or 450, the process goes to the following processing (step 500) of setting the S poisoning elimination suspending flag.

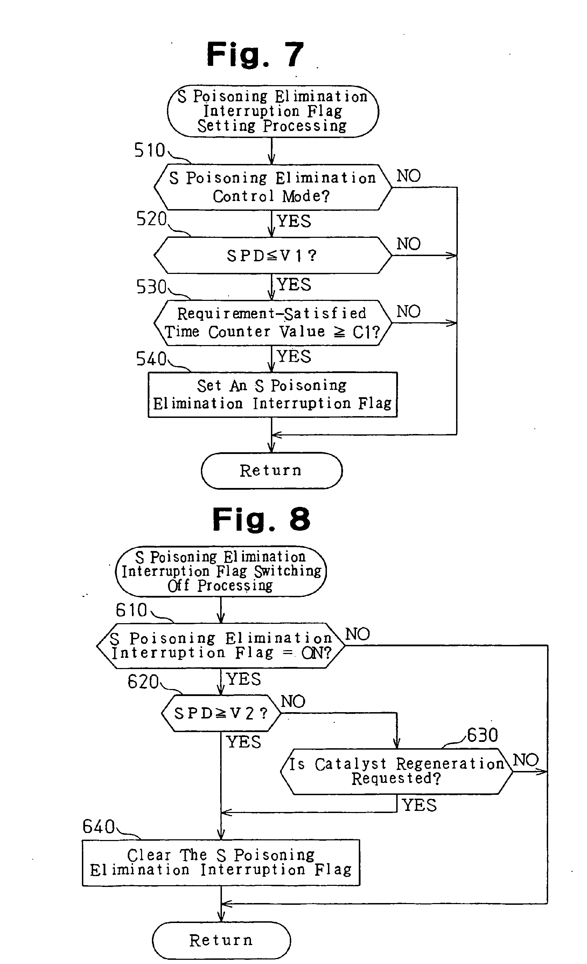

FIG. 7 shows the detail of this processing. The electronic controller 41 judges respectively whether the mode is the S poisoning elimination control mode (step 510), whether the vehicle speed SPD is no more than the predetermined value V1 (here 30 km/h) (step 520), and whether the requirement-satisfied time counter is more than a predetermined value C1 (e.g., a value which corresponds to 3 minutes) (step 530). When all of the judgment requirements at these steps 510 to 530 are satisfied, the electronic controller 41 sets the S poisoning elimination suspending flag, and the process goes to the processing of switching the S poisoning elimination suspending flag (step 600) to OFF. On the other hand, when at least one of the judgment requirements at steps 510 to 530 is not satisfied, the electronic controller 41 does not access the S poisoning elimination suspending flag, and the process goes to the following processing (step 600) of switching the S poisoning elimination suspending flag to OFF as it is in this case.

FIG. 8 shows the detailed processing of switching the flag to OFF. The electronic controller 41 judges first whether the S poisoning elimination suspending flag is ON at step 610. When this judgment requirement is satisfied, the electronic controller 41 next judges at step 620 whether the vehicle speed SPD is no less than a predetermined value V2 for non-congestion determination (e.g., 60 km/h). Since it is conceivable that a vehicle is not in a running on a not-congested road and the S emission control does not stagnate when this judgment requirement is satisfied, the electronic controller 41 clears the S poisoning elimination suspending flag at step 640.

On the other hand, when the judgment requirement at the above-mentioned step 620 is not satisfied, the electronic controller 41 judges at step 630 whether a catalyst regeneration request is made (whether the catalyst regeneration request flag is ON). When this judgment requirement is satisfied, so as to perform the catalyst regeneration control in preference to the suspension of the S emission control for the purpose of performing combustion removal of the deposited fine particulate matter PM, the electronic controller 41 clears the S poisoning elimination suspending flag at step 640. Thus, when the vehicle speed SPD becomes no less than the predetermined value V2, or the mode is the catalyst regeneration control mode, the electronic controller 41 clears the S poisoning elimination suspending flag. After passing through the processing at step 640, the electronic controller 41 ends the processing of clearing the S poisoning elimination suspending flag. When the judgment requirement at step 610 or 630 is not satisfied, the electronic controller 41 does not access the S poisoning elimination suspending flag, and ends the processing of clearing the S poisoning elimination suspending flag as it is.

Since the execution requirements of the S poisoning elimination control mentioned above are satisfied when the S poisoning elimination suspending flag is switched to OFF during the suspension of the S poisoning elimination control, the S poisoning elimination control mode is set and the suspension of the S poisoning elimination control is removed.

FIG. 9 shows the aspects of changes of the flags, counter, and the like when each processing of the catalyst control mode setting routine and S poisoning elimination suspending flag setting routine which are mentioned above is performed.

At time t1, when the S poisoning amount exceeds the predetermined value S1, the S poisoning elimination request flag is switched from OFF to ON, and the catalyst regeneration control mode is set by this switching as the catalyst control mode. By the catalyst regeneration control being performed according to this setting, the combustion and removal of the fine particulate matter PM deposited on both the catalytic converters 32 and 33 are performed, and hence, the deposition amount of the fine particulate matter PM turns to decrease from increase. The S poisoning amount in both the catalytic converters 32 and 33 increases.

When the deposition amount of the fine particulate matter PM becomes 0 at time t2 by this decrease, the execution requirement of the catalyst regeneration control are not satisfied (step 100: NO), and hence, the S poisoning elimination control mode is set by the satisfaction of execution requirements of the S poisoning elimination control. The S poisoning elimination control is started according to this setting. Since the mode is just switched from the catalyst regeneration control mode to the S poisoning elimination control mode although the situation of V1 ≥ SPD continues, processing is performed in order of steps 310 → 320 → 330 → 340 → 350 in FIG. 5, and the S emission stagnation determination value is calculated.

When it passes over the time t2, the count operation of the requirement-satisfied time counter is started. The S poisoning amount turns to decrease from increase by the above-mentioned S poisoning elimination control. On the other hand, the deposition amount of the fine particulate matter PM turns to increase from decrease by the stop of the catalyst regeneration control.

When the vehicle speed SPD exceeds the predetermined value V1 at time t3, the requirement-satisfied time counter is cleared by the processing of steps 420 → 450 in FIG. 6.

Then, when the vehicle speed SPD becomes less than the predetermined value V1 at time t4, the S emission stagnation determination value is calculated by the processing at steps 310 → 320 → 330 → 350 in FIG. 5.

When it passes over the time t4, the count operation of the requirement-satisfied time counter is started. When the situation where the S poisoning amount is no less than the S emission stagnation determination value continues in spite of the S poisoning elimination control being performed, and the S poisoning amount is yet no less than the S emission stagnation determination value even if predetermined time elapses from the start of the above-mentioned count operation (even if a counted value becomes the predetermined value C1 at time t5), processing is performed in order of steps 510 → 520 → 530 → 540 in FIG. 7. The S poisoning elimination suspending flag is switched from OFF to ON. Since the execution requirements of the S poisoning elimination control are not satisfied by this switching, the S poisoning elimination control is suspended. As the catalyst control mode, the NOx reduction control mode or normal control mode (in this case, NOx reduction control mode), which is a mode different from the S poisoning elimination control mode, is set, and the catalyst control (NOx reduction control) according to the control mode is performed.

Then, when the vehicle speed SPD becomes no less than the predetermined value V2 at time t6, processing is performed in order of steps 610→ 620 → 640, and the S poisoning elimination suspending flag is switched from ON to OFF in FIG. 8. Since the execution requirements of the S poisoning elimination control are satisfied by this switching, the S poisoning elimination control mode can be set. However, in this case, since some of the fine particulate matter PM is deposited, the mode does not immediately shift to the S poisoning elimination control mode, but the catalyst regeneration control mode is set first. Combustion and removal of the fine particulate matter PM are performed by this setting, and their deposition amount turns to decrease from increase.

When the deposition amount of the fine particulate matter PM becomes 0 in time t7 by this decrease, the execution requirement of the catalyst regeneration control are not satisfied, and the execution requirements of the S poisoning elimination control are satisfied, the S poisoning elimination control mode is set and the S poisoning elimination control is started. S poisoning amount turns to decrease from increase by this start, and the PM deposition amount starts to increase.

The same actions as those in the period from time t2 to time t5 mentioned above are performed in the period from time t7 to time t15. For example, when the vehicle speed SPD is no more than the predetermined value V1 at time t8 (t12) under the S poisoning elimination control, the S emission stagnation determination value is calculated. When it passes over the time t8 (t12), the count operation of the requirement-satisfied time counter is started. However, when the S poisoning amount becomes less than the S emission stagnation determination value at the time t9 (t13) before the counted value becomes the predetermined value C1, the requirement-satisfied time counter is cleared. When the S poisoning amount increases and exceeds the S emission stagnation determination value at time t10 (t14), the count operation of the requirement-satisfied time counter is started again. When the vehicle speed SPD exceeds the predetermined value V1 at the time t11 before the counted value becomes the predetermined value C1, the requirement-satisfied time counter is cleared. When the S poisoning amount becomes less than the S emission stagnation determination value at the time t15 before the counted value becomes the predetermined value C1, the requirement-satisfied time counter is cleared.

Although the S poisoning elimination suspending flag is switched to OFF by the vehicle speed SPD becoming no less than the predetermined value V2 for non-congestion determination at the time t6 mentioned above, the S poisoning elimination suspending flag is switched to OFF also at time t16. In this case, the S poisoning elimination suspending flag is switched to OFF when the deposition amount of the fine particulate matter PM becomes no less than the predetermined value pm1, the catalyst regeneration request flag is set, and the catalyst regeneration control mode is set. The catalyst regeneration control is performed according to this switching, and the PM deposition amount turns to decrease from increase.

This embodiment explained in full detail above obtains the following advantages.
(1) Depending on the operational state of the engine 10, there may arise a phenomenon that the occlusion amount (S poisoning amount) of the sulfur oxide (SOx) in both the catalytic converters 32 and 33 seldom decreases since the emission of sulfur oxide (SOx) does not progress even if fuel is supplied to the exhaust gas. In this case, there is a possibility that it is not possible to emit sulfur oxide (SOx) even if the fuel supply to the exhaust gas is continued. In this embodiment, on the basis of the change of the S poisoning amount in both the catalytic converters 32 and 33, it is judged whether the emission of sulfur oxide (SOx) stagnates, and when it is judged that the emission stagnates, the fuel supply to the exhaust gas is suspended. Therefore, it is added to the execution requirements of the S poisoning elimination control that the S emission stagnation flag is OFF, and when the S emission stagnation flag is ON, the S poisoning elimination control is suspended. By this suspension, it becomes possible to suppress the deterioration of fuel consumption by lessening the supply of useless fuel.
(2) When the vehicle speed is low, there is a possibility that the vehicle is in traffic congestion and the engine 10 is operated in the state of low rotation and low loading. The amount of the exhaust gas exhausted from the engine 10 is little in this state, in connection with this, exhaust temperature is low, and also the amount of oxygen included in the exhaust gas is little. Since oxygen relating to the combustion of fuel is little, a heating value in connection with the oxidation of fuel is little even if the fuel is supplied to the exhaust gas. For this reason, it becomes hard to raise and hold the catalyst temperature of both the catalytic converters 32 and 33 to the temperature at which sulfur oxide (SOx) can be emitted, and to make the sulfur oxide (SOx) emitted from both the catalytic converters 32 and 33, and this causes the stagnation of emission of the sulfur oxide (SOx) mentioned above.
   In this embodiment, on condition that the vehicle speed SPD is at least no more than the predetermined value V1 for congestion judgment (step 520), it is judged whether the emission of sulfur oxide (SOx) stagnates. Thus, by restricting the opportunity of this judgment by adding to the requirements for judging emission stagnation that the vehicle speed SPD is no more than the predetermined value V1 for congestion judgment, it is possible to grasp in more sufficient accuracy whether the exhaust purifying apparatus 11 is in the state that the apparatus 11 cannot make sulfur oxide (SOx) emitted even if the apparatus 11 performs fuel supply to the exhaust gas. As a result, it is possible to suppress that the suspension of the fuel supply to the exhaust gas is performed unnecessarily.
(3) When the emission of sulfur oxide (SOx) stagnates, the S poisoning amount in both the catalytic converters 32 and 33 seldom changes (decreases) even if time elapses. In this embodiment, when the predetermined requirements for stagnation judgment, or the permission requirements are satisfied, the S emission stagnation determination value is set on the basis of the S poisoning amount at that time (steps 310 to 350). The S poisoning amount after setting is compared with the S emission stagnation determination value, and it is judged whether the emission of sulfur oxide (SOx) stagnates on the basis of the comparison result (steps 360 to 380). Thus, since the temporal change of the S poisoning amount is taken into consideration of judging whether emission stagnates, it is possible to raise judgment precision.
(4) When sulfur oxide (SOx) is emitted after setting the S emission stagnation determination value, the S poisoning amount in both the catalytic converters 32 and 33 after the emission is expected to become less than the S poisoning amount at the time of setting the S emission stagnation determination value. When emission is made properly, the S poisoning amount after emission is expected to become comparable as a value obtained by subtracting a certain value (amount emitted) from the S poisoning amount at the time of setting the S emission stagnation determination value.
   In this embodiment, a value obtained by subtracting the predetermined value AS from the S poisoning amount in both the catalytic converters 32 and 33 when the permission requirements for stagnation judgment are satisfied is used as the S emission stagnation determination value (step 350). Therefore, it is possible to set the S emission stagnation determination value at a suitable value by using a suitable value as the predetermined value ΔS, and it is possible to judge in good accuracy whether emission stagnates by comparing the S emission stagnation determination value with the S poisoning amount.
(5) During the emission control of sulfur oxide (SOx), fuel is supplied to the exhaust gas. When the vehicle is in traffic congestion under this situation, the amount of the exhaust gas exhausted from the engine 10 decreases. Exhaust temperature drops in connection with this, and the amount of oxygen included in the exhaust gas decreases. Therefore, since a heating value in connection with the combustion of fuel is little, catalyst temperature may not become high enough, and hence, there is a possibility that the emission of sulfur oxide (SOx) from both the catalytic converters 32 and 33 stagnates. This possibility arises immediately when the vehicle starts moving in traffic congestion.
   In this embodiment, on the predetermined requirement for stagnation judgment (steps 310 to 330) that it is immediately after the vehicle speed SPD is no more than the predetermined value V1 for congestion judgment during the emission control of sulfur oxide (SOx), the S emission stagnation determination value is set on the basis of the S poisoning amount in both the catalytic converters 32 and 33 when this predetermined requirement is satisfied. Thus, since the S poisoning amount at the time of possibility that the emission of sulfur oxide (SOx) stagnates arising is used for setting the S emission stagnation determination value, it is possible to raise the accuracy of the S emission stagnation determination value.
(6) Although this relates to item (5), when the vehicle is in traffic congestion, the amount of the exhaust gas exhausted from the engine 10 is little, in connection with this, exhaust temperature becomes low, and also the amount of oxygen included in the exhaust gas becomes little. Under such a situation, although fuel is supplied to the exhaust gas when the emission control of sulfur oxide (SOx) is performed, since a heating value in connection with the combustion of the fuel is little, catalyst temperature may not become high enough. Hence, there is a possibility that the emission of sulfur oxide (SOx) from both the catalytic converters 32 and 33 stagnates. This possibility arises immediately when the emission control of sulfur oxide (SOx) is started.
   In this embodiment, on the predetermined requirement for stagnation judgment (steps 310 to 340) that the vehicle speed SPD is no more than the predetermined value V1 for congestion judgment and it is the timing when the emission control of sulfur oxide (SOx) is started, the S emission stagnation determination value is set on the basis of the S poisoning amount in both the catalytic converters 32 and 33 when this predetermined requirement is satisfied. Thus, since the S poisoning amount at the time of possibility that the emission of sulfur oxide (SOx) stagnates arising is used for setting the S emission stagnation determination value, it is possible to raise the accuracy of the setting.
(7) During the emission control of sulfur oxide (SOx), fuel is supplied to the exhaust gas. In this situation, when the vehicle is in traffic congestion, the amount of the exhaust gas exhausted from the engine 10 is little, in connection with this, exhaust temperature becomes low, and also the amount of oxygen included in the exhaust gas becomes little. Therefore, since a heating value in connection with the combustion of fuel is little, catalyst temperature may not become high enough, and hence, it becomes easy that the emission of sulfur oxide (SOx) from both the catalytic converters 32 and 33 stagnates. When such a situation continues, a possibility that the emission of sulfur oxide (SOx) stagnates is high.
   In this embodiment, when the state that the vehicle speed SPD is no more than the predetermined value V1 for congestion judgment, and the S poisoning amount is more than the S emission stagnation determination value during the emission control of sulfur oxide (SOx) being continued for predetermined time, it is judged that the emission of sulfur oxide (SOx) stagnates (steps 510 to 540). It is possible to raise the judgment precision of the purport that emission stagnates by performing such judgment.
(8) When the vehicle speed SPD becomes high, the amount of the exhaust gas exhausted from the engine 10 increases, in connection with this, exhaust temperature becomes high, and the amount of oxygen included in the exhaust gas will also increase. Hence, since oxygen relating to the combustion of fuel is much, a heating value in connection with the oxidation of the fuel supplied to the exhaust gas becomes much. It becomes possible to raise and hold the catalyst temperature of both the catalytic converters 32 and 33 to the temperature at which sulfur oxide (SOx) can be emitted, and to make the sulfur oxide (SOx) emitted from both the catalytic converters 32 and 33.
   In this embodiment, when the vehicle speed SPD becomes no less than the predetermined value V2 for non-congestion determination, the suspension of emission control of sulfur oxide (SOx) is removed (steps 620 and 640). It is possible to prevent the emission control from being continuously suspended although the emission of sulfur oxide (SOx) becomes possible owing to the end of the suspension. It is possible to suppress the excessive suspension by removing the suspension of the emission control at suitable time in this manner.
(9) When the reproduction request against the fine particulate matter PM is performed (the catalyst regeneration request flag is switched to ON) even if it is a time when the emission control of sulfur oxide (SOx) is suspended, the suspension of the emission control is compulsorily terminated and the combustion and removal of the fine particulate matter PM are performed (steps 610, 630, and 640). For this reason, it is possible to give a high priority to the regeneration of catalytic converters over the deterioration suppression of fuel consumption.

In the above-mentioned embodiment, it is acceptable to remove the requirement that the catalyst regeneration control mode is set (step 630) from the requirements of switching the S poisoning elimination suspending flag to OFF.

Whether S emission stagnates may be determined in the following manner. First, a point when the permission requirements for stagnation judgment are satisfied is set as a reference. Then, the decrease extent of the S poisoning amount in a term from the reference point until the predetermined time has elapsed. If the decrease extent is smaller than a predetermined value, the S emission is determined to be stagnant.

The permission requirements for stagnation judgment may be changed to content different from those in the above-mentioned embodiment. For example, it may be configured to remove one of (a) it is under the S poisoning elimination control and is immediately after the vehicle speed SPD becomes no more than the predetermined value V1 for congestion judgment, and (b) the vehicle speed SPD is no more than the predetermined value V1 for congestion judgment and the S poisoning elimination control is started, from the above-mentioned permission requirements.

The present invention is applicable also to an exhaust purifying apparatus of an internal combustion engine mounted on an object except a vehicle.

## Claims

1. An exhaust purifying apparatus (11) for purifying exhaust gas that is exhausted through an exhaust passage (14) from an internal combustion engine (10) as the engine (10) operates, wherein the exhaust gas contains sulfur oxides, the apparatus (11) comprising:
an exhaust purifying catalyst (32, 33, 34) located in the exhaust passage (14), wherein the catalyst (32, 33, 34) is capable of occluding sulfur oxides;
emission control means (31), wherein the emission control means (31) supplies fuel to exhaust gas through the exhaust passage (14), thereby setting the temperature of the catalyst (32, 33, 34) to a temperature at which sulfur oxides occluded by the catalyst (32, 33, 34) can be emitted, and wherein the emission control means (31) reduces sulfur oxides occluded by the catalyst (32, 33, 34) to emit the sulfur oxides from the catalyst (32, 33, 34);
judging means (41), wherein, based on change in an occlusion amount of sulfur oxides in the catalyst, the judging means (41) judges whether emission of the sulfur oxides from the catalyst (32, 33, 34) is stagnating; and the apparatus (11) being **characterized by**:
suspending means (41), wherein, when the judging means judges that emission of sulfur oxides from the catalyst is stagnating, the suspending means (41) suspends supply of fuel to exhaust gas performed by the control means (31).

2. The apparatus (11) according to claim 1, **characterized in that** the engine (10) is mounted on a vehicle, wherein the judging means (41) judges whether emission of sulfur oxide is stagnating when predetermined permission requirements are satisfied, and wherein the permission requirements at least include that the speed of the vehicle is no more than a predetermined traffic congestion determination value.

3. The apparatus (11) according to claim 2, **characterized in that**, when the permission requirements are satisfied, the judging means (41) sets a stagnation determination value based on the occlusion amount of sulfur oxides in the catalyst (32, 33, 34) at the time, wherein the judging means (41) compares the occlusion amount of sulfur oxides in the catalyst (32, 33, 34) after setting the stagnation determination value with the stagnation determination value, and wherein, based on the result of the comparison, the judging means (41) performs the stagnation judgement.

4. The apparatus (11) according to claim 3, **characterized in that** the stagnation determination value is a value obtained by subtracting a predetermined value from the occlusion amount of sulfur oxides in the catalyst (32, 33, 34) at the time when the permission requirements are satisfied.

5. The apparatus (11) according to claim 3 or 4, **characterized in that** the permission requirements include that the control means (31) is performing the emission control immediately after the vehicle speed falls to or below the traffic congestion determination value during the emission control by the control means (31).

6. The apparatus (11) according to any one of claims 3 to 5, **characterized in that** the permission requirements include that the vehicle speed is no more than the traffic stagnation determination value and that the control means (31) has just started the emission control.

7. The apparatus (11) according to any one of claim 2 to 6, **characterized in that** the judging means (41) judges that emission of sulfur oxides is stagnating when the vehicle speed is no more than the traffic congestion determination value during the emission control by the control means (31), and a state where the occlusion amount of sulfur oxides in the catalyst (32, 33, 34) is greater than the stagnation determination value has continued for a predetermined period.

8. The apparatus (11) according to any one of claims 2 to 7, **characterized in that** the suspension of the emission control by the suspending means (41) is removed when the vehicle speed becomes equal to or more than a predetermined non-congestion determination value.

9. The apparatus (11) according to any one of claims 1 to 8, **characterized in that** the catalyst (32, 33, 34) has a function to trap particulate matter in exhaust gas and to combust and remove the trapped particulate matter, wherein the suspension of the emission control by the suspending means (41) is removed when a request for combusting and removing particulate matter deposited on the catalyst (32, 33, 34) is made.

10. An exhaust purifying method, in which an exhaust purifying catalyst (32, 33, 34) located in an exhaust passage (14) of an internal combustion engine (10) is used for purifying exhaust gas that is exhausted through the exhaust passage (14) from the internal combustion engine (10) as the engine (10) operates, the method comprising:
occluding sulfur oxides contained in the exhaust gas with the catalyst (32; 33, 34); and
supplying fuel to exhaust gas through the exhaust passage (14), thereby setting the temperature of the catalyst (32, 33, 34) to a temperature of the catalyst (32, 33, 34) to a temperature at which sulfur oxides occluded by the catalyst (32, 33, 34) can be emitted from the catalyst (32, 33, 34)and reducing sulfur oxides occluded by the catalyst to emit the sulfur oxides from the catalyst (32, 33, 34); and
judging whether emission of the sulfur oxides from the catalyst (32, 33, 34) is stagnating based on change in an occlusion amount of sulfur oxides in the catalyst (32, 33; 34); the method being **characterized by**:
suspending supply of fuel to the exhaust gas when the emission of sulfur oxides from the catalyst (32, 33, 34) is judged to be stagnating.

## Patentansprüche

1. Abgasreinigungsvorrichtung (11) zum Reinigen von Abgas, das durch eine Abgasleitung (14) von einem Verbrennungsmotor (10) ausgestoßen wird, während der Motor (10) arbeitet, wobei das Abgas Schwefeloxide enthält, und wobei die Vorrichtung (11) folgendes aufweist:
einen Abgasreinigungskatalysator (32, 33, 34), der in der Abgasleitung (14) angeordnet ist, wobei der Katalysator (32, 33, 34) in der Lage ist, Schwefeloxide zu speichern,
ein Emissionssteuermittel (31), wobei das Emissionssteuermittel (31) Kraftstoff durch die Abgasleitung (14) zum Abgas liefert, wodurch die Temperatur des Katalysators (32, 33, 34) auf eine Temperatur eingestellt wird, bei der Schwefeloxide, die vom Katalysator (32, 33, 34) gespeichert werden, ausgetragen werden können, und wobei das Emissionssteuermittel (31) die Schwefeloxide, die vom Katalysator (32, 33, 34) gespeichert werden, reduziert, um die Schwefeloxide aus dem Katalysator (32, 33, 34) auszutragen,
ein Entscheidungsmittel (41), wobei das Entscheidungsmittel (41) aufgrund der Änderung der Menge an im Katalysator gespeicherten Schwefeloxiden entscheidet, ob die Emission der Schwefeloxide aus dem Katalysator (32, 33, 34) stagniert; und wobei die Vorrichtung (11) **gekennzeichnet ist durch**
ein Aussetzungsmittel (41), wobei das Aussetzungsmittel (41) die Zufuhr von Kraftstoff zum Abgas, die von dem Steuermittel (31) durchgeführt wird, aussetzt, wenn das Entscheidungsmittel urteilt, dass die Emission von Schwefeloxiden aus dem Katalysator stagniert.

2. Vorrichtung (11) nach Anspruch 1, **dadurch gekennzeichnet, dass** der Motor (10) in einem Fahrzeug eingebaut ist, wobei das Entscheidungsmittel (41) entscheidet, dass die Emission von Schwefeloxid stagniert, wenn vorgegebene Zulassungsanforderungen erfüllt sind, und wobei die Zulassungsanforderungen zumindest beinhalten, dass die Geschwindigkeit des Fahrzeugs nicht über einem vorgegebenen Verkehrsstockungs-Bestimmungswert liegt.

3. Vorrichtung (11) nach Anspruch 2, **dadurch gekennzeichnet, dass**, wenn die Zulassungsanforderungen erfüllt sind, das Entscheidungsmittel (41) einen Stagnationsbestimmungswert aufgrund der aktuell im Katalysator (32, 33, 34) gespeicherten Schwefeloxidmenge setzt, wobei das Entscheidungsmittel (41) die im Katalysator (32, 33, 34) gespeicherte Schwefeloxidmenge nach dem Setzen des Stagnationsbestimmungswerts mit dem Stagnationsbestimmungswert vergleicht, und wobei das Entscheidungsmittel (41) aufgrund des Vergleichsergebnisses die Stagnationsentscheidung trifft.

4. Vorrichtung (11) nach Anspruch 3, **dadurch gekennzeichnet, dass** der Stagnationsbestimmungswert ein Wert ist, der durch Subtrahieren eines vorgegebenen Werts von der im Katalysator (32, 33, 34) gespeicherten Schwefeloxidmenge zu einer Zeit, zu der die Zulassungsanforderungen erfüllt sind, erhalten wird.

5. Vorrichtung (11) nach Anspruch 3 oder 4, **dadurch gekennzeichnet, dass** die Zulassungsanforderungen beinhalten, dass das Steuermittel (31) die Emissionssteuerung unmittelbar durchführt, nachdem die Fahrzeuggeschwindigkeit während der Emissionssteuerung durch das Steuermittel auf oder unter den Verkehrsstockungs-Bestimmungswert gefallen ist.

6. Vorrichtung (11) nach einem der Ansprüche 3 bis 5, **dadurch gekennzeichnet, dass** die Zulassungsanforderungen beinhalten, dass die Fahrzeuggeschwindigkeit nicht über dem Verkehrsstockungs-Bestimmungswert liegt und dass das Steuermittel (31) gerade mit der Emissionssteuerung begonnen hat.

7. Vorrichtung (11) nach einem der Ansprüche 2 bis 6, **dadurch gekennzeichnet, dass** das Entscheidungsmittel entscheidet, dass die Emission von Schwefeloxiden stagniert, wenn die Fahrzeuggeschwindigkeit während der Emissionssteuerung durch das Steuermittel (31) nicht über dem Verkehrsstockungs-Bestimmungswert liegt, und der Zustand, dass die im Katalysator (32, 33, 34) gespeicherte Menge an Schwefeloxiden über dem Stagnationsbestimmungswert liegt, über eine vorgegebene Zeit angedauert hat.

8. Vorrichtung (11) nach einem der Ansprüche 2 bis 7, **dadurch gekennzeichnet, dass** die Aussetzung der Emissionssteuerung durch das Aussetzungsmittel (41) aufgehoben wird, wenn die Fahrzeuggeschwindigkeit einen vorgegebenen Wert erreicht hat, der anzeigt, dass keine Verkehrsstockung vorliegt.

9. Vorrichtung (11) nach einem der Ansprüche 1 bis 8, **dadurch gekennzeichnet, dass** der Katalysator (32, 33, 34) die Funktion hat, partikelförmige Stoffe im Abgas einzufangen und die eingefangenen partikelförmigen Stoffe zu verbrennen und zu beseitigen, wobei die Aussetzung der Emissionssteuerung (41) durch das Aussetzungsmittel aufgehoben wird, wenn eine Forderung nach Verbrennung und Beseitigung der partikelförmigen Stoffe, die sich am Katalysator (32, 33, 34) angelagert haben, gestellt wird.

10. Abgasreinigungsverfahren, in dem ein Abgasreinigungskatalysator (32, 33, 34), der in der Abgasleitung (14) eines Verbrennungsmotors (10) angeordnet ist, zum Reinigen von Abgas verwendet wird, das durch die Abgasleitung (14) vom Verbrennungsmotor (10) ausgetragen wird, wenn der Motor (10) läuft, wobei das Verfahren folgendes umfasst:
Speichern von im Abgas enthaltenden Schwefeloxiden durch den Katalysator (32, 33, 34); und
Zuführen von Kraftstoff durch die Abgasleitung (14) zum Abgas, wodurch die Temperatur des Katalysators (32, 33, 34) auf eine Temperatur eingestellt wird, bei der die im Katalysator (32, 33, 34) gespeicherten Schwefeloxide aus dem Katalysator (32, 33, 34) ausgetragen werden können, und die vom Katalysator gespeicherten Schwefeloxide reduziert werden, um die Schwefeloxide aus dem Katalysator (32, 33, 34) auszutragen, und
Entscheiden, ob die Emission der Schwefeloxide aus dem Katalysator (32, 33, 34) stagniert, aufgrund der Änderung der im Katalysator (32, 33, 34) gespeicherten Schwefeloxidmenge, wobei das Verfahren **gekennzeichnet ist durch**:
Aussetzung der Zufuhr von Kraftstoff zum Abgas, wenn entschieden wird, dass die Emission von Schwefeloxiden aus dem Katalysator (32, 33, 34) stagniert.

## Revendications

1. Appareil de purification des émissions d'échappement (11) destiné à purifier les gaz d'échappement qui sont évacués par l'intermédiaire d'un passage d'échappement (14) d'un moteur à combustion interne (10) lorsque le moteur (10) fonctionne, dans lequel les gaz d'échappement contiennent des oxydes de soufre, l'appareil (11) comprenant :
un catalyseur de purification des émissions d'échappement (32, 33, 34) placé dans le passage d'échappement (14), dans lequel le catalyseur (32, 33, 34) est capable d'occlure les oxydes de soufre ;
un moyen de commande des émissions (31), dans lequel le moyen de commande des émissions (31) délivre le carburant à travers le passage d'échappement (14), en établissant de ce fait la température du catalyseur (32, 33, 34) à une température à laquelle les oxydes de soufre occlus par le catalyseur (32, 33, 34) peuvent être émis, et dans lequel le moyen de commande des émissions (31) réduit les oxydes de soufre occlus par le catalyseur (32, 33, 34) pour émettre les oxydes de soufre du catalyseur (32, 33, 34) ;
un moyen de jugement (41), dans lequel, sur la base d'un changement d'une quantité d'occlusion d'oxydes de soufre dans le catalyseur, le moyen de jugement (41) juge si les émissions des oxydes de soufre provenant du catalyseur (32, 33, 34) stagnent ; et l'appareil (11) étant **caractérisé par** :
un moyen de suspension (41), dans lequel, lorsque le moyen de jugement juge que les émissions des oxydes de soufre du catalyseur stagnent, le moyen de suspension (41) suspend l'alimentation en carburant vers les gaz d'échappement réalisée par le moyen de commande (31).

2. Appareil (11) selon la revendication 1,
**caractérisé en ce que** le moteur (10) est monté sur un véhicule, dans lequel le moyen de jugement (41) juge si les émissions des oxydes de soufre stagnent lorsque les demandes d'autorisation prédéterminées sont satisfaites, et dans lequel les demandes d'autorisation comprennent au moins une valeur de détermination d'embouteillage prédéterminée.

3. Appareil (11) selon la revendication 2,
**caractérisé en ce que**, lorsque les demandes d'autorisation sont satisfaites, le moyen de jugement (41) établit une valeur de détermination de stagnation sur la base de la quantité d'occlusion des oxydes de soufre dans le catalyseur (32, 33, 34) sur le moment, dans lequel le moyen de jugement (41) compare la quantité d'occlusion des oxydes de soufre dans le catalyseur (32, 33, 34) après l'établissement de la valeur de détermination de stagnation avec la valeur de détermination de stagnation, et dans lequel sur la base des résultats de comparaison, le moyen de jugement (41) réalise le jugement de stagnation.

4. Appareil (11) selon la revendication 3,
**caractérisé en ce que** la valeur de détermination de stagnation est une valeur obtenue en soustrayant une valeur prédéterminée de la quantité d'occlusion d'oxydes de soufre dans le catalyseur (32, 33, 34) au moment où les demandes d'autorisation sont satisfaites.

5. Appareil (11) selon la revendication 3 ou 4, **caractérisé en ce que** les demandes d'autorisation comprennent le fait que le moyen de commande (31) réalise la commande des émissions immédiatement après que la vitesse du véhicule ait chuté à ou au-dessus de la valeur de détermination d'embouteillage pendant les commandes d'émission par le moyen de commande (31).

6. Appareil (11) selon l'une quelconque des revendications 3 à 5, **caractérisé en ce que** les demandes d'autorisation comprennent le fait que la vitesse du véhicule n'est pas supérieure à la valeur de détermination d'embouteillage et que le moyen de commande (31) vient juste de lancer la commande des émissions.

7. Appareil (11) selon l'une quelconque des revendications 2 à 6, **caractérisé en ce que** le moyen de jugement (41) juge que les émissions d'oxydes de soufre stagnent lorsque la vitesse du véhicule n'est pas supérieure à la valeur de détermination d'embouteillage pendant la commande des émissions par le moyen de commande (31), et un état dans lequel la quantité d'occlusion d'oxydes de soufre dans le catalyseur (32, 33, 34) est supérieure à la valeur de détermination de stagnation continue pendant une période prédéterminée.

8. Appareil (11) selon l'une quelconque des revendications 2 à 7, **caractérisé en ce que** la suspension de la commande des émissions par le moyen de suspension (41) est supprimée lorsque la vitesse du véhicule devient égale ou supérieure à une valeur de détermination de non encombrement prédéterminée.

9. Appareil (11) selon l'une quelconque des revendications 1 à 8, **caractérisé en ce que** le catalyseur (32, 33, 34) possède une fonction consistant à piéger les matières particulaires dans les gaz d'échappement et à brûler et supprimer les matières particulaires piégées, dans lequel la suspension de la commande des émissions par le moyen de suspension (41) est supprimée lorsqu'une demande de combustion et de suppression des matières particulaires déposées sur le catalyseur (32, 33, 34) est délivrée.

10. Procédé de purification des émissions d'échappement, dans lequel un catalyseur de purification des émissions d'échappement (32, 33, 34) placé dans un passage d'échappement (14) d'un moteur à combustion interne (10) est utilisé pour purifier les gaz d'échappement qui sont évacués à travers le passage d'échappement (14) du moteur à combustion interne (10) lorsque le moteur (10) fonctionne, le procédé comprenant les étapes consistant à :
occlure les oxydes de soufre contenus dans les gaz d'échappement avec le catalyseur (32, 33, 34) ; et
délivrer le carburant vers les gaz d'échappement à travers le passage d'échappement (14), en établissant de ce fait la température du catalyseur (32, 33, 34) à une température du catalyseur (32, 33, 34) à une température à laquelle les oxydes de soufre occlus par le catalyseur (32, 33, 34) peuvent être émis du catalyseur (32, 33, 34) et réduire les oxydes de soufre occlus par le catalyseur pour émettre les oxydes de soufre du catalyseur (32, 33, 34) ; et
juger si les émissions des oxydes de soufre du catalyseur (32, 33, 34) stagnent sur la base du changement d'une quantité d'occlusion des oxydes de soufre dans le catalyseur (32, 33, 34) ; le procédé étant **caractérisé par** l'étape consistant à :
suspendre l'alimentation du carburant vers les gaz d'échappement lorsque les émissions d'oxydes de soufre provenant du catalyseur (32, 33, 34) sont jugées stagnantes.
